# EUROPEAN PATENT APPLICATION

(11) **EP 4 733 837 A2**
(43) Date of publication of application: **29.04.2026**
(21) Application number: 26156282.1
(22) Date of filing: 13.07.2021
(51) Int. Cl.: G02F 1/153

(54) **ELECTROCHROMIC DEVICE HAVING ADJUSTABLE REFLECTIVITY, AND ELECTRONIC TERMINAL COMPRISING SAME**

(30) Priority: 14.07.2020 CN 202010673620
(62) Divisional of application: 21841386.2
(71) Applicant: Shenzhen Guangyi Tech Co., Ltd., Shenzhen, Guangdong 518133 (CN)
(72) Inventor: HE, Jiazhi, Shenzhen, Guangdong, 518133 (CN); HE, Yixue, Shenzhen, Guangdong, 518133 (CN)
(74) Representative: Ricker, Mathias

(57) **Abstract**

An electrochromic device having the adjustable reflectivity, and an electronic terminal comprising same. The electrochromic device comprises a first transparent substrate layer (1), an electrochromic stack (2), a metal ion stack (3), and a second substrate layer (4) which are stacked in sequence. The electrochromic stack (2) comprises a first transparent conductive layer (21) and a first electrochromic functional layer (22) which are stacked. The metal ion stack (3) comprises a second transparent conductive layer (31), a metal ion layer (32), and an electrodeposition suppression layer (33) which are stacked in sequence. The first electrochromic functional layer (22) is adjacent to the electrodeposition suppression layer (33). The visual effect of the electrochromic device is enhanced by the cooperation of the change in the transmittance of the electrochromic stack (2) and the change in the reflectivity of the metal ion stack (3).

## Description

### TECHNICAL FIELD

The present application belongs to the technical field of color-changing displays, and particularly relates to an electrochromic device having adjustable reflectivity and an electronic terminal comprising the same.

### BACKGROUND

Electrochromism refers to the phenomenon that the optical properties of materials undergo stable and reversible color-changing under the action of an external electric field, which is manifested as a reversible change of color and transparency in appearance. Materials with the electrochromic property are called electrochromic materials, and the devices made of electrochromic materials are called electrochromic devices. The electrochromic device has important application potential in the fields of color-changing glasses, electronic displays, military concealment, energy conservation in building, etc.

The common electrochromic device is generally composed of a transparent substrate layer, a transparent conductive layer, an electrochromic layer, an electrolyte layer, an ion storage layer, a transparent conductive layer and a transparent substrate layer stacked in sequence. When a voltage is applied, ions are conducted from the ion storage layer through the electrolyte layer into the electrochromic layer to achieve color-changing; when a reverse voltage is applied, ions are conducted from the electrochromic layer through the electrolyte layer into the ion storage layer to achieve decolorization.

The electrochromic materials can be divided into inorganic electrochromic materials and organic electrochromic materials. Inorganic electrochromic materials have the advantages of stability and fast response, such as tungsten trioxide, vanadium pentoxide, nickel oxide, titanium dioxide and the like; organic electrochromic materials have lots of types, and rich colors and design convenience, such as viologen and polythiophene. By selecting different electrochromic materials, electrochromic devices with different colors and different color-changing ranges can be obtained.

However, for a certain electrochromic device, the color-changing effect given by the transmittance change is relatively simple, and it is difficult to present a variety of colorful visual effects. Moreover, even if a pattern layer is added in the lower part of the device, when the transmittance of the electrochromic device changes, especially when the electrochromic device exhibits a colored state and has a low transmittance, the electrochromic device often is not bright enough, and the color of the pattern layer looks dark, and therefore, the electrochromic device is not aesthetically pleasing in practical application, and the visual effect is poor.

### SUMMARY

The present application provides an electrochromic device having adjustable reflectivity and an electronic terminal comprising the same. The reflectivity and transmittance of the electrochromic device are adjustable, and the visual effect of the electrochromic device is enhanced and enriched by the combination of the transmittance change of the electrochromic stack and the reflectivity change of the metal ion stack.

In a first aspect, the present application provides an electrochromic device having adjustable reflectivity, and the electrochromic device includes a first transparent substrate layer, an electrochromic stack, a metal ion stack and a second substrate layer stacked in sequence; the electrochromic stack includes a first transparent conductive layer and a first electrochromic functional layer stacked; the metal ion stack includes a second transparent conductive layer, a metal ion layer and, optionally, an electrodeposition suppression layer stacked in sequence; the first electrochromic functional layer is adjacent to the metal ion layer or the electrodeposition suppression layer;
or the electrochromic device includes a first transparent substrate layer, an electrochromic stack, a transparent insulating layer, a metal ion stack and a second substrate layer stacked in sequence; the electrochromic stack includes a first transparent conductive layer, a second electrochromic functional layer and a third transparent conductive layer stacked in sequence; the metal ion stack includes a second transparent conductive layer, a metal ion layer and a fourth conductive layer stacked in sequence.

It should be noted that the "optionally, an electrodeposition suppression layer" in the present application refers to that an electrodeposition suppression layer is or is not arranged. When the electrochromic stack has the electrodeposition suppression layer, the first electrochromic functional layer is adjacent to the electrodeposition suppression layer; when the electrochromic stack does not have the electrodeposition suppression layer, the first electrochromic functional layer is adjacent to the metal ion layer.

The electrochromic device provided by the present application adopts the electrochromic stack and the metal ion stack as the main structure. In the metal ion stack, when a positive voltage is applied to the first transparent conductive layer and a negative voltage is applied to the second transparent conductive layer, or when a positive voltage is applied to the fourth conductive layer and a negative voltage is applied to the second transparent conductive layer, the metal ions in the metal ion layer will be reduced to metal and deposited on the surface of the second transparent conductive layer, increasing the reflectivity of the metal ion stack; when a negative voltage is applied to the first transparent conductive layer and a positive voltage is applied to the second transparent conductive layer, or when a negative voltage is applied to the fourth conductive layer and a positive voltage is applied to the second transparent conductive layer, the deposited metal will be oxidized to metal ions and enter the metal ion layer, reducing the reflectivity of the metal ion stack. By adjusting the applied voltage, the metal ion stack can be switched between transparent and completely reflective, or in any reflectivity state between transparent and completely reflective.

In the electrochromic stack, by adjusting the voltage applied to the first electrochromic functional layer or the second electrochromic functional layer, the first electrochromic functional layer or the second electrochromic functional layer can be switched between the colored state and the decolorized state, or in any transmittance state between the colored state and the decolorized state. The color of the first electrochromic functional layer or the second electrochromic functional layer in the colored state depends on a type of electrochromic material selected.

Compared with the existing electrochromic devices, the present application enhances the visual effect of the electrochromic device (especially in the colored state) through the combination of the transmittance change of the electrochromic stack and the reflectivity change of the metal ion stack, enabling the electrochromic device to show a more colorful visual effect, and in some cases, enabling the product surface to show a metal-like texture, so as to satisfy the needs of various usage scenarios.

In the present application, when the electrochromic functional layer of the electrochromic stack is adjacent to the metal ion layer of the metal ion stack, the first transparent conductive layer and the second transparent conductive layer are the two electrodes for driving the electrochromic device. When the applied voltage is changed, the transmittance of the electrochromic stack and the reflectivity of the metal ion stack will change simultaneously.

When the electrochromic stack and the metal ion stack are separated by a transparent insulating layer, the first transparent conductive layer and the third transparent conductive layer are the electrodes for driving the electrochromic stack, and the second transparent conductive layer and the fourth conductive layer are the electrodes for driving the metal ion stack. The electrochromic stack and the metal ion stack are independent of each other, and the transmittance change of the electrochromic stack and the reflectivity change of the metal ion stack do not affect each other. In this case, the metal ion stack can be configured as such a form that the second transparent conductive layer is close to the second substrate layer, or the fourth conductive layer is close to the second substrate layer.

In the present application, the "transparent" refers to being completely transparent or partially transparent, and the first transparent substrate layer can be completely transparent or partially transparent, so that the electrochromic device can show a specific pattern. The second substrate layer can be completely transparent, partially transparent or opaque.

The transparent substrate layer can be a rigid transparent substrate layer or a flexible transparent substrate layer. There is no special limitation on a material of the substrate layer in the present application; exemplarily, the material of the rigid transparent substrate layer can be glass; the material of the flexible transparent substrate layer includes but is not limited to polyethylene terephthalate (PET), cycloolefin copolymer and cellulose triacetate, of which any one or a combination of at least two can be selected; the typical but non-limiting combination includes a combination of PET and cycloolefin copolymer, a combination of cycloolefin copolymer and cellulose triacetate, a combination of PET and cellulose triacetate, and a combination of PET, cycloolefin copolymer and cellulose triacetate.

In an embodiment of the present application, the first electrochromic functional layer is an anodic electrochromic material layer or a cathodic electrochromic material layer.

In an embodiment of the present application, the second electrochromic functional layer is a polymer dispersed liquid crystal layer, a suspended particle device layer, or a composite layer of an anodic electrochromic material, an electrolyte and a cathodic electrochromic material.

In the present application, a material of the first electrochromic functional layer is an anodic electrochromic material or a cathodic electrochromic material; the cathodic electrochromic material can gain electrons and undergo a reduction reaction, and thus change the transmittance between the colored state and the decolorized state; the anodic electrochromic material can lose electrons and undergo an oxidation reaction, and thus change the transmittance between the colored state and the decolorized state. Specifically, the material of the first electrochromic functional layer can be selected from a color-changing material that can form a solid thin film in the prior art; for example, the color-changing material can be an inorganic material such as NiO, WO₃, Nb₂O₅,TiO₂ and the like; or an organic material such as a thiophene derivatives, a copolymer system and the like; or a metal conjugated system such as Prussian blue and the like. The color change of the first electrochromic functional layer can be adjusted according to the types of electrochromic material. For selecting an anodic electrochromic material or a cathodic electrochromic material as the material of the first electrochromic functional layer, the selection can be performed according to requirements of the product on transmittance and reflectivity, and the selection can be matched with the initial state of the corresponding metal ion stack, which is the basis for material type selection.

The second electrochromic functional layer is a structural unit with electrochromic function, which can be a flexible or rigid layer with adjustable transmittance made of one or more layers of material. For example, it may be a PDLC (Polymer Dispersed Liquid Crystal, Polymer Dispersed Liquid Crystal) layer, a SPD (Suspended Particle Device, Suspended Particle Device) layer or an EC (Electrochromic, Electrochromic) layer. The EC layer is a composite layer of an anodic electrochromic material, an electrolyte and a cathodic electrochromic material. In the present application, the EC layer can be a liquid composite material layer or a gel composite material layer formed by mixing an anodic electrochromic material, an electrolyte and a cathodic electrochromic material, or a solid composite layer with a three-layer structure composed of an anodic electrochromic material layer, a solid electrolyte layer and a cathodic electrochromic material layer stacked in sequence.

For better illustration, the EC layer with a specific structure (composed of an anodic electrochromic material layer, an electrolyte layer and a cathodic electrochromic material layer stacked in sequence) is taken as an example to illustrate the process of adjusting the transmittance of the electrochromic layer: a voltage applied across the anodic electrochromic material layer and the cathodic electrochromic material layer causes ions to move between the anodic electrochromic material layer and the cathodic electrochromic material layer, and undergo intercalation/deintercalation, or deintercalation/intercalation, in the anodic electrochromic material layer and the cathodic electrochromic material layer, thereby changing the optical state of the electrochromic material in the anodic electrochromic material layer and the cathodic electrochromic material layer, and further changing the transmittance of the EC layer, and causing the EC layer to change among the colored state, the intermediate state and the decolorized state.

In an embodiment of the present application, the metal ion layer is a metal ion-containing liquid electrolyte layer or a metal ion-containing gel electrolyte layer.

Preferably, a metal ion in the metal ion layer includes one or a combination of at least two of a silver ion, a bismuth ion, a copper ion and a zinc ion.

In an embodiment of the present application, the fourth conductive layer is composed of staggered or spaced metal wires, and/or a metal strip located at an edge of the plane where the fourth conductive layer is located.

It should be noted that a material of the second transparent conductive layer in the present application occupies the entire area of the plane where the second transparent conductive layer is located; when a positive voltage is applied to the fourth conductive layer and a negative voltage is applied to the second conductive layer, the metal ions in the metal ion layer can deposit an entire metal layer on the surface of the second conductive layer, thereby increasing the reflectivity of the metal ion stack. The fourth conductive layer is composed of thin metal wires and/or a metal strip at the edge; when a negative voltage is applied to the fourth conductive layer and a positive voltage is applied to the second conductive layer, the metal layer deposited on one side of the second conductive layer is oxidized to metal ions and enters the metal ion layer; the metal ions on one side of the fourth conductive layer are reduced to metal and deposited on the metal wires or the edge metal strip of the fourth conductive layer, and the light can still pass through the area without metal, thereby reducing the reflectivity of the metal ion stack.

Preferably, a width of the metal wire is less than or equal to 100 µm, such as 100 µm, 90 µm, 80 µm, 70 µm, 60 µm, 50 µm, 40 µm, 30 µm, 20 µm, 15 µm, 10 µm, 5 µm, 3 µm or 1 µm, etc., preferably less than or equal to 20 µm.

Preferably, a distance between two adjacent spaced metal wires is more than or equal to 10 µm, such as 10 µm, 20 µm, 50 µm, 80 µm, 100 µm, 150 µm, 200 µm, 300 µm, 500 µm, 1000 µm, 2000 µm or 5000 µm, etc..

Preferably, a width of the metal strip is less than or equal to 3 cm, such as 3 cm, 2.5 cm, 2 cm, 1.5 cm, 1 cm, 0.5 cm or 0.3 cm, etc.

In the present application, the size of the metal wire or the metal strip is preferably selected within the above range, which can ensure that the fourth conductive layer does not block light obviously, and does not affect the adjustment of the reflectivity of the metal ion stack.

In an embodiment of the present application, a metal layer is further provided between the metal ion layer and the second transparent conductive layer, and a metal element of the metal layer includes one or a combination of at least two of silver, bismuth, copper and zinc.

In the present application, for the electrochromic device in which the electrochromic stack and the metal ion stack are connected, there is no specific limitation on the material of the second transparent conductive layer in the present application.

For the electrochromic device in which a transparent insulating layer is arranged between the electrochromic stack and the metal ion stack, when the metal ion stack does not include the metal layer, at least one of the materials of the second transparent conductive layer and the fourth conductive layer includes one or a combination of at least two of metal silver, bismuth, copper and zinc; when the metal ion stack includes the metal layer, there is no specific limitation on the materials of the second transparent conductive layer and the fourth conductive layer in the present application.

In the present application, if there is no metal layer on the surface of the metal ion layer, when the reflectivity of the electrochromic device needs to be adjusted, firstly, it is necessary to apply a negative voltage to the second transparent conductive layer and apply a positive voltage to the first transparent conductive layer or the fourth conductive layer, which can reduce the metal ions in the metal ion layer to metal and deposit a metal layer on the surface of the second transparent conductive layer. If there is the metal layer arranged on the surface of the metal ion layer, when the reflectivity of the electrochromic device needs to be adjusted, the adjustment can be realized by firstly applying a negative voltage to the second transparent conductive layer as well as a positive voltage to the first transparent conductive layer or the fourth conductive layer, or by firstly applying a positive voltage to the second transparent conductive layer as well as a negative voltage to the first transparent conductive layer or the fourth conductive layer.

In an embodiment of the present application, a material of the electrodeposition suppression layer is selected from a triazole derivative. The electrodeposition suppression layer exerts an effect of interacting with the metal ion by the triazole ring structure, and thus the metal ion can convert to a sub-ion and then form an oligomer of the metal-triazole ring derivative, which thereby prevents the metal ion from depositing on the surface, causes the metal ion to deposit on the surface of the second conductive layer after being reduced to metal, and prevents the metal from depositing on the first electrochromic functional layer.

In one embodiment of the present application, the triazole derivative is selected from one or a combination of at least two of benzotriazole, 1-(methoxymethyl)-1H-benzotriazole, 1-(formamidomethyl)-1H-benzotriazole and N5-benzyl-1H-1,2,4-triazole-3,5-diamine.

In an embodiment of the present application, the first transparent conductive layer and the third transparent conductive layer are independently formed from one or at least two of indium tin oxide, zinc aluminum oxide, fluorine doped tin oxide, silver nanowires, graphene, carbon nanotubes, metal mesh and silver nanoparticles.

In an embodiment of the present application, the transparent insulating layer is a hollow layer, a transparent substrate layer, or a composite layer formed by bonding a plurality of transparent substrate layers with an adhesive layer.

In the present application, the hollow layer refers to that the space between the electrochromic stack and the metal ion stack has no solid or liquid material filled, and the hollow layer can be an air layer, a vacuum layer or the like. The transparent insulating layer can be composed of one transparent substrate layer, or a plurality of transparent substrate layers bonded by an adhesive layer.

In an embodiment of the present application, a functional layer is further arranged on one side or two sides of the first transparent substrate layer, and/or one side or two sides of the second substrate layer, and/or one side or two sides of the transparent insulating layer, and/or a functional layer is also arranged between the transparent insulating layers; the functional layer includes one or a combination of at least two of a pattern layer, a texture layer, an anti-reflective layer, a color layer, an ink layer, a filter layer, a photonic crystal layer, a liquid crystal layer and an adhesive layer, so that the electrochromic device can obtain the corresponding effect of the functional layer.

In the present application, the functional layer can be arranged on one side or two sides of the first transparent substrate layer, and/or one side or two sides of the second substrate layer, and/or one side or two sides of the transparent insulating layer; when the transparent insulating layer has a multi-layer structure, the functional layer can be arranged between the layers of the multi-layer structure, so that the electrochromic device can obtain the corresponding function.

In an embodiment of the present application, a substrate support layer is further arranged on the outer side of the first transparent substrate layer and/or the outer side of the second substrate layer.

In an embodiment of the present application, the substrate support layer is connected to the first transparent substrate layer and/or the second substrate layer by a bonding layer.

In the present application, the outer side refers to the side of the first transparent substrate layer or the second substrate layer away from the electrochromic stack and the metal ion stack. The substrate support layer adopts a rigid material or a flexible material; the rigid material includes glass, rigid plastic and metal, and the flexible material includes a flexible plastic film. The substrate support layer close to the first transparent substrate layer is preferably a transparent material; the substrate support layer close to the second substrate layer can be a completely transparent material, a partially transparent material or an opaque material, which can be selected according to specific use scenarios.

In a second aspect, the present application provides an electronic terminal, and the electronic terminal includes the electrochromic device according to the first aspect.

The electronic terminal can be a wearable electronic product, a mobile electronic product terminal, architectural glass, laminated glass, insulating glass, a decorative film and the like. When the electrochromic device is applied to the electronic terminal, it can be arranged at any required position such as the surface or inside of the terminal, and according to specific application scenarios, the electrochromic device can achieve various effects such as appearance diversification, privacy masking, status display, message differentiation, adjustment of ambient brightness, filtration/transmission of light with different predetermined wavelengths and the like.

Compared with the prior art, the present application has the following beneficial effects:
In the electrochromic device provided by the present application, the transmittance of the electrochromic stack and the reflectivity of the metal ion stack can be adjusted by adjusting parameters such as the magnitude, duration, direction and the like of the applied voltage, and the combination of the transmittance change of the electrochromic stack and the reflectivity change of the metal ion stack can enhance the visual effect of the existing electrochromic devices, bring colorful colors and reflective effects to the electrochromic device surface, and in some cases, enable the device surface to show a metal-like texture, so as to satisfy the needs of various usage scenarios.

### BRIEF DESCRIPTION OF DRAWINGS

FIG. 1 is a schematic cross-sectional structure diagram of an electrochromic device provided in Embodiment 1 of the present application;
FIG. 2 is a schematic cross-sectional structure diagram of an electrochromic device provided in Embodiment 2 of the present application;
FIG. 3 is a schematic cross-sectional structure diagram of an electrochromic device provided in Embodiment 4 of the present application;
FIG. 4 is a schematic cross-sectional structure diagram of an electrochromic device provided in Embodiment 5 of the present application;
FIG. 5 is a schematic cross-sectional structure diagram of an electrochromic device provided in Embodiment 6 of the present application;
FIG. 6 is a schematic cross-sectional structure diagram of an electrochromic device provided in Embodiment 7 of the present application;
FIG. 7 is a schematic cross-sectional structure diagram of a second electrochromic functional layer in Embodiment 7 of the present application;
FIG. 8 is a schematic structural diagram of a fourth conductive layer in Embodiment 7 of the present application;
FIG. 9 is a schematic cross-sectional structure diagram of an electrochromic device provided in Embodiment 8 of the present application;
FIG. 10 is a schematic structural diagram of a fourth conductive layer in Embodiment 8 of the present application;
FIG. 11 is a schematic cross-sectional structure diagram of an electrochromic device provided in Embodiment 11 of the present application;
FIG. 12 is a schematic cross-sectional structure diagram of an electrochromic device provided in Embodiment 12 of the present application;

In the figures, 1 is a first transparent substrate layer, 2 is an electrochromic stack, 3 is a metal ion stack, 4 is a second substrate layer, 5 is a functional layer, 6 is a first substrate support layer, 7 is a second substrate support layer, and 8 is a transparent insulating layer;
21 is a first transparent conductive layer, 22 is a first electrochromic functional layer, 23 is a second electrochromic functional layer, and 24 is a third transparent conductive layer;
221 is a cathodic electrochromic material layer, 222 is an electrolyte layer, and 223 is an anodic electrochromic material layer;
31 is a second transparent conductive layer, 32 is a metal ion layer, 33 is an electrodeposition suppression layer, 34 is a metal layer, and 35 is a fourth conductive layer;
81 is a third transparent substrate layer, 82 is a functional layer, and 83 is a fourth transparent substrate layer.

### DETAILED DESCRIPTION

The technical solutions of the present application will be further described below with reference to the accompanying drawings and through specific embodiments. It should be apparent to those skilled in the art that the specific embodiments are merely used for a better understanding of the present application, and should not be construed as a specific limitation of the present application.

### Embodiment 1

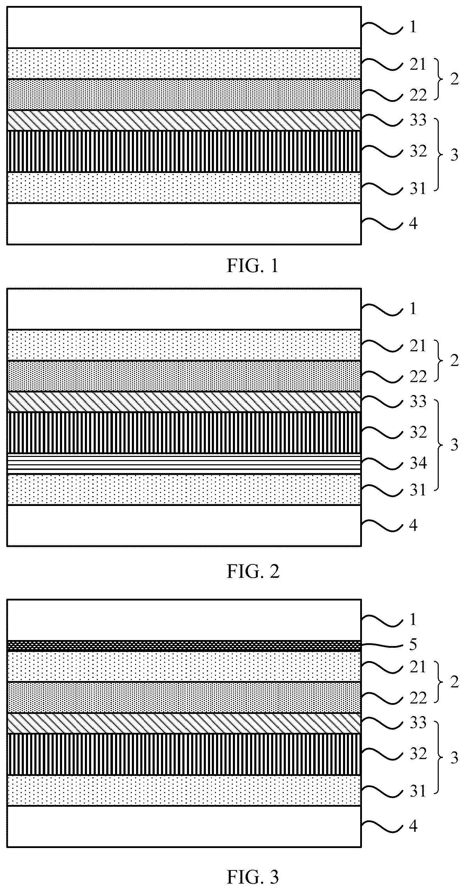

This embodiment provides an electrochromic device having adjustable reflectivity, as shown in FIG. 1, including a first transparent substrate layer 1, an electrochromic stack 2, a metal ion stack 3 and a second substrate layer 4 stacked in sequence;
the electrochromic stack 2 includes a first transparent conductive layer 21 and a first electrochromic functional layer 22 stacked;
the metal ion stack 3 includes a second transparent conductive layer 31, a metal ion layer 32 and an electrodeposition suppression layer 33 stacked in sequence, and the first electrochromic functional layer 22 is adjacent to the electrodeposition suppression layer 33;
wherein, the first transparent conductive layer 21 and the second transparent conductive layer 31 are used as a pair of electrodes for driving the electrochromic device, the second substrate layer 4 is completely transparent, a material of the first electrochromic functional layer 22 is NiO, a material of the metal ion layer 32 is a colloid formed by dissolving 3.0 wt% hydroxyethyl cellulose in an aqueous solution of 10 mM AgNO₃, and a material of the electrodeposition suppression layer 33 is N5-benzyl-1H-1,2,4-triazole-3,5-diamine.

The process of adjusting the transmittance and reflectivity of the electrochromic device provided in this embodiment is exemplarily described below:
Initial state: the electrochromic stack 2 was initially colorless, the metal ion stack 3 was initially a transparent state, and the appearance of the electrochromic device was a colorless and transparent state;

Applying a forward voltage (+2.0 V): a forward voltage was applied to the electrochromic device in the initial state, and NiO lost electrons and underwent an oxidation reaction, which changed from colorless to tan; Ag⁺ in the metal ion layer 32 gained electrons and underwent reduction, and deposited a metal Ag layer with a reflective effect on the surface of the second transparent conductive layer 31; the electrochromic stack 2 still had a certain transmittance in a colored state, and after the light passed through the electrochromic stack, it would be reflected by the reflective mirror, so that the appearance of the electrochromic device was a tan mirror with a reflective effect;

Applying a reverse voltage (-1.2 V): NiO gained electrons and underwent reduction, and the color reverted to colorless; the deposited metal Ag layer was oxidized to Ag⁺, and then entered the metal ion layer 32, and the metal ion stack reverted to the transparent state; the electrochromic device reverted to the initial state, and the appearance was the colorless and transparent state;

In this embodiment, when a potential of the first transparent conductive layer 21 is higher than a potential of the second transparent conductive layer 31, the voltage direction is referred as a forward; when the potential of the first transparent conductive layer 21 is lower than the potential of the second transparent conductive layer 31, the voltage direction is referred as a reverse.

In the process of applying voltage to the electrochromic device, by adjusting parameters such as the magnitude, duration, direction and the like of the applied voltage, the transmittance of the electrochromic stack 2 can be adjusted to any predetermine transmittance state between the colored state and the decolorized state, and the reflectivity of the metal ion stack 3 can be adjusted to any predetermine reflectivity of semi-transmitted and semi-reflected state between transparent and completely reflective, which enriches and enhances the appearance effect of the electrochromic device. The electrochromic device can be used in a wearable electronic product, a mobile electronic product terminal, architectural glass, laminated glass, insulating glass, a decorative film and other electronic terminal products.

### Embodiment 2

This embodiment provides an electrochromic device having adjustable reflectivity, the structure of which is shown in FIG. 2, and this embodiment differs from Embodiment 1 in that the metal ion stack 3 includes a second transparent conductive layer 31, a metal layer 34, a metal ion layer 32 and an electrodeposition suppression layer 33 stacked in sequence;

A material of the first electrochromic functional layer 22 is WO₃, a material of the metal layer 34 is Cu, a material of the metal ion layer 32 is a colloid formed by dissolving 3.0 wt% hydroxyethyl cellulose in an aqueous solution of 20 mM Cu(Cl)₂, 10 mM HCl and 1 M LiBr, and a material of the electrodeposition suppression layer 33 is benzotriazole.

The process of adjusting the transmittance and reflectivity of the electrochromic device provided in this embodiment is described below:
Initial state: the electrochromic stack 2 was initially colorless, the metal ion stack 3 was initially a reflective state, and the appearance of the electrochromic device was a reflective copper mirror effect;
Applying a reverse voltage (-2.0 V): a reverse voltage was applied to the electrochromic device in the initial state, and WO₃ gained electrons and underwent reduction, and changed from colorless to blue; Cu in the metal layer 34 lost electrons and was oxidized to Cu²⁺, and then entered the metal ion layer 32, and the metal ion stack 3 changed from a reflective mirror state to a transparent state; the appearance of the electrochromic device was a blue of a certain transmittance;
Applying a forward voltage (+1.0 V): the first electrochromic functional layer 22 was oxidized, and the color reverted to colorless; the metal ions in the metal ion layer 32 underwent reduction, and deposited a metal layer 34 with a reflective effect on the surface of the second transparent conductive layer 31; the electrochromic device reverted to the initial state, and reverted to a reflective copper mirror effect;
In this embodiment, when a potential of the first transparent conductive layer 21 is higher than a potential of the second transparent conductive layer 31, the voltage direction is referred as a forward ; when the potential of the first transparent conductive layer 21 is lower than the potential of the second transparent conductive layer 31, the voltage direction is referred as a reverse.

In the process of applying voltage to the electrochromic device, by adjusting parameters such as the magnitude, duration, direction, and the like of the applied voltage, the transmittance of the electrochromic stack 2 can be adjusted to any predetermine transmittance state between the colored state and the decolorized state, and the reflectivity of the metal ion stack 3 can be adjusted to any predetermine reflectivity of semi-transmitted and semi-reflected state between transparent and completely reflective, which enriches and enhances the appearance effect of the electrochromic device. The electrochromic device can be used in a wearable electronic product, a mobile electronic product terminal, architectural glass, laminated glass, insulating glass, a decorative film and other electronic terminal products.

### Embodiment 3

This embodiment provides an electrochromic device having adjustable reflectivity, and differs from Embodiment 1 in that the second substrate layer 4 is partially transparent or completely opaque, and adopts a material with a predetermined color, texture or pattern.

### Embodiment 4

This embodiment provides an electrochromic device having adjustable reflectivity, the structure of which is shown in FIG. 3, and this embodiment differs from Embodiment 1 in that a functional layer 5 is arranged on the side of the first transparent substrate layer 1 close to the electrochromic stack 2; the functional layer 5 is a pattern layer, a texture layer, an anti-reflective layer, a color layer, an ink layer, a filter layer, a photonic crystal layer or a liquid crystal layer.

In an alternative to this embodiment, the functional layer 5 can also be arranged on the side of the first transparent substrate layer 1 away from the electrochromic stack 2, and/or the side of the second substrate layer 4 close to the metal ion stack 3, the side of the second substrate layer 4 away from the metal ion stack 3, or both sides of the metal ion stack 2, and/or both sides of the first transparent substrate layer 1, and/or both sides of the second substrate layer 4.

### Embodiment 5

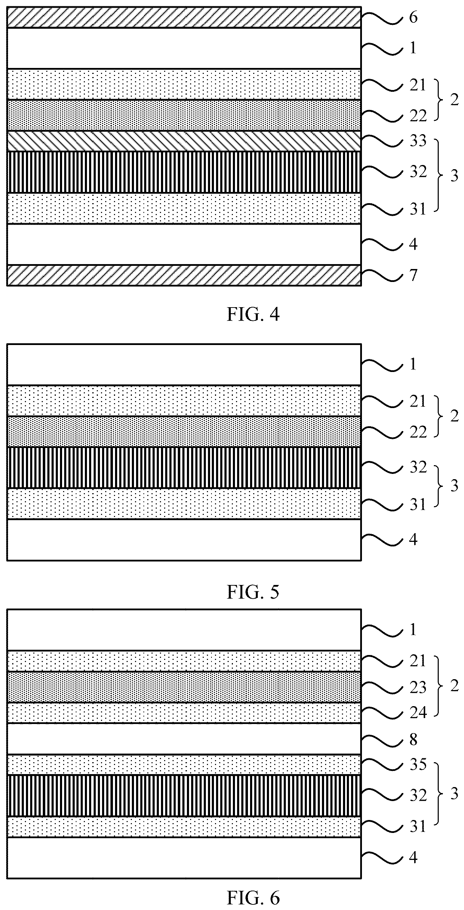

This embodiment provides an electrochromic device having adjustable reflectivity, the structure of which is shown in FIG. 4, and this embodiment differs from Embodiment 1 in that a first substrate support layer 6 is arranged on the outer side of the first transparent substrate layer 1 (the first transparent substrate layer 1 and the first substrate support layer 6 are bonded by a bonding layer, and the bonding layer is not shown in FIG. 5), and a second substrate support layer 7 is arranged on the outer side of the second substrate layer 4 (the second substrate layer 4 and the second substrate support layer 7 are bonded by a bonding layer, and the bonding layer is not shown in FIG. 5).

In an alternative to this embodiment, the first substrate support layer 6 can also be merely arranged on the outer side of the first transparent substrate layer 1, or the second substrate support layer 7 can also be merely arranged on the outer side of the second substrate layer 4.

### Embodiment 6

This embodiment provides an electrochromic device having adjustable reflectivity, as shown in FIG. 5, including a first transparent substrate layer 1, an electrochromic stack 2, a metal ion stack 3 and a second substrate layer 4 stacked in sequence;
the electrochromic stack 2 includes a first transparent conductive layer 21 and a first electrochromic functional layer 22 stacked;
the metal ion stack 3 includes a second transparent conductive layer 31 and a metal ion layer 32 stacked in sequence, and the first electrochromic functional layer 22 is adjacent to the metal ion layer 32;
wherein, the first transparent conductive layer 21 and the second transparent conductive layer 31 are used as a pair of electrodes for driving the electrochromic device, the second substrate layer 4 is completely transparent, a material of the first electrochromic functional layer 22 is poly-2-[(2-ethylhexyloxy)methyl]3,4-thieno-1,4-dioxane, and a material of the metal ion layer 32 is Bi(Cl)₃.

The process of adjusting the transmittance and reflectivity of the electrochromic device provided in this embodiment is exemplarily described below:
Initial state: the electrochromic stack 2 was initially blue, the metal ion stack 3 was initially a transparent state, and the appearance of the electrochromic device was a transparent and blue state;
Applying a forward voltage (+1.6 V): a forward voltage was applied to the electrochromic device in the initial state, and poly-2-[(2-ethylhexyloxy)methyl]3,4-thieno-1,4-dioxane lost electrons and underwent an oxidation reaction, which changed from blue to colorless; Bi³⁺ in the metal ion layer 32 gained electrons and underwent reduction, and deposited a metal Bi layer with a reflective effect on the surface of the second transparent conductive layer 31; the appearance of the electrochromic device was a silver mirror with a reflective effect;
Applying a reverse voltage (-1.6V): poly-2-[(2-ethylhexyloxy)methyl]3,4-thieno-1,4-dioxane gained electrons and underwent reduction, and the color reverted to blue; the deposited metal Bi layer was oxidized to Bi³⁺, and then entered the metal ion layer 32, and the metal ion stack reverted to the transparent state; the electrochromic device reverted to the initial state, and the appearance was the transparent and blue state.

In this embodiment, when a potential of the first transparent conductive layer 21 is higher than a potential of the second transparent conductive layer 31, the voltage direction is referred as a forward; when the potential of the first transparent conductive layer 21 is lower than the potential of the second transparent conductive layer 31, the voltage direction is referred as a reverse.

In the process of applying voltage to the electrochromic device, by adjusting parameters such as the magnitude, duration, direction and the like of the applied voltage, the transmittance of the electrochromic stack 2 can be adjusted to any predetermine transmittance state between the colored state and the decolorized state, and the reflectivity of the metal ion stack 3 can be adjusted to any predetermine reflectivity of semi-transmitted and semi-reflected state between transparent and completely reflective, which enriches and enhances the appearance effect of the electrochromic device. The electrochromic device can be used in a wearable electronic product, a mobile electronic product terminal, architectural glass, laminated glass, insulating glass, a decorative film and other electronic terminal products.

However, since this embodiment dose not adopt an electrodeposition suppression layer, there will be any metal Bi deposited on the first electrochromic functional layer 22 gradually as the charge and discharge performs, affecting the long-term cycle performance of the electrochromic device as well as the appearance effect.

### Embodiment 7

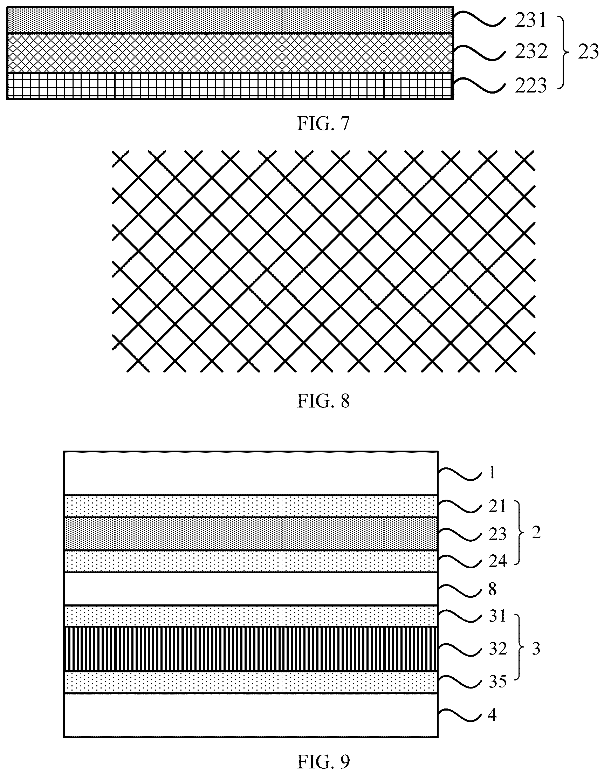

This embodiment provides an electrochromic device having adjustable reflectivity, as shown in FIG. 6, including a first transparent substrate layer 1, an electrochromic stack 2, a transparent insulating layer 8, a metal ion stack 3 and a second substrate layer 4 stacked in sequence;
the electrochromic stack 2 includes a first transparent conductive layer 21, a second electrochromic functional layer 23 and a third transparent conductive layer 24 stacked in sequence, and the first transparent conductive layer 21 is close to the first transparent substrate layer 1;
the metal ion stack 3 includes a second transparent conductive layer 31, a metal ion layer 32 and a fourth conductive layer 35 stacked in sequence, and the second transparent conductive layer 31 is close to the second substrate layer 4;
the structure of the second electrochromic functional layer 23 is shown in FIG. 7, which is composed of a cathodic electrochromic material layer 231, an electrolyte layer 232 and an anodic electrochromic material layer 233 stacked in sequence, and the cathodic electrochromic material layer 231 is close to the first transparent conductive layer 21;
wherein, the first transparent conductive layer 21 and the third transparent conductive layer 24 are used as a pair of electrodes for driving the electrochromic stack 2; the second transparent conductive layer 31 and the fourth conductive layer 35 are used as a pair of electrodes for driving the metal ion stack 3;
the second substrate layer 4 is completely transparent, the transparent insulating layer 8 is a transparent substrate layer, a material of the cathodic electrochromic material layer 231 is tungsten oxide, a material of the electrolyte layer is LiClO₄-propylene carbonate, a material of the anodic electrochromic material layer 233 is nickel oxide, and a material of the metal ion layer 32 is a colloid formed by dissolving 3.0wt% hydroxyethyl cellulose in an aqueous solution containing 10 mM CuCl₂, 10 mM BiCl₃, 10 mM HCl and 1 M LiBr;
the shape of the fourth conductive layer 35 is shown in FIG. 8, which includes metal network wires composed of staggered Cu/Bi alloy metal wires, and a width of the metal wire is 10 µm, and an interval between metal wires is 80 µm.

The process of adjusting the transmittance and reflectivity of the electrochromic device provided in this embodiment is exemplarily described below:
Initial state: the electrochromic stack 2 was initially colorless, the metal ion stack 3 was initially a transparent state; the electrochromic device was a transparent state. Without electricity applied to the electrochromic stack 2 and the metal ion stack 3, the incident light could thus pass through the electrochromic stack 2 and the metal ion stack 3.
Adjustment of the transmittance of the electrochromic stack 2: a reverse voltage of -2 V was applied to the electrochromic stack solely (a potential of the first transparent conductive layer 21 was lower than a potential of the third transparent conductive layer 24), the cathodic electrochromic material layer 231 underwent reduction and changed from colorless to blue, and the anodic electrochromic material layer 233 underwent oxidization and changed from colorless to tan; a forward voltage of +1.5 V was applied (a potential of the first transparent conductive layer 21 was higher than a potential of the three transparent conductive layer 24), the cathodic electrochromic material layer 231 underwent oxidization and changed from blue to colorless, and the anodic electrochromic material layer 233 underwent reduction and changed from tan to colorless; by adjusting parameters such as the magnitude, duration, direction and the like of the applied voltage, the transmittance of the electrochromic stack 2 can be adjusted to any predetermine transmittance state between the colorless decolorized state and the dark-blue (a superimposed color of blue and tan) colored state.

Adjustment of the reflectivity of the metal ion stack 3: a reverse voltage of +1.0 V was applied to the metal ion stack solely (a potential of the second transparent conductive layer 31 was lower than a potential of the fourth conductive layer 35), and the metal Cu and Bi in the metal mesh of the fourth conductive layer 35 lost electrons and were oxidized to Cu²⁺ and Bi³⁺, and then entered the metal ion layer 32; the metal ions in the metal ion layer 32 underwent reduction, and deposited a composite metal layer of Cu and Bi with a reflective effect on the surface of the second transparent conductive layer 31, and the metal ion stack 3 was a completely reflective state. By applying a voltage of -1.0 V (a potential of the second transparent conductive layer 31 was higher than a potential of the fourth conductive layer 35), the deposited Cu and Bi of the composite metal layer were oxidized to metal ions, and then entered the metal ion layer 32; the metal ions in the metal ion layer 32 gained electrons and were reduced to metal at the metal network wires of the fourth conductive layer 35, and thus deposited on the metal network wires, and since the light could pass through the network holes, the metal ion stack 3 was a transparent state. By adjusting parameters such as the magnitude, duration, direction and the like of the applied voltage, the reflectivity of the metal ion stack 3 can be adjusted to any predetermine reflectivity of semi-transmitted and semi-reflected state between transparent and completely reflective.

In the electrochromic device provided in this embodiment, the electrochromic stack 2 and the metal ion stack 3 were separately and independently controlled, and thus the layer number was more than that of Embodiment 1; the electrochromic stack 2 and the metal ion stack 3 had no limitation on each other in state, and could give enriched appearance display effects by adjusting the voltages respectively.

### Embodiment 8

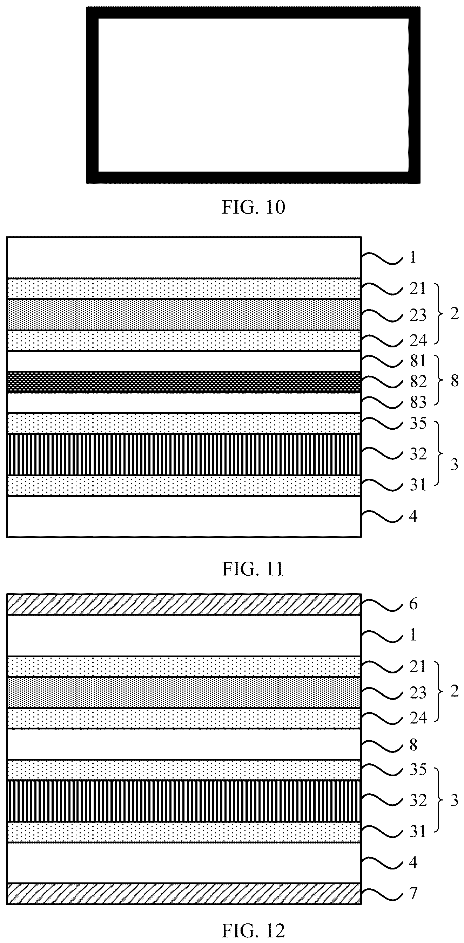

This embodiment provides an electrochromic device having adjustable reflectivity, the structure of which is shown in FIG. 9, and this embodiment differs from Embodiment 7 in that the metal ion stack 3 is configured as such a form that the fourth conductive layer 35 is close to the second substrate layer 4, and the second transparent conductive layer 31 is close to the transparent insulating layer 8, and the shape of the fourth conductive layer 35 is shown in FIG. 10, which is a metal frame formed by four Ag/Bi alloy metal strips located at edges of the plane of the layer, and a width of the strip is 2 cm.

### Embodiment 9

This embodiment provides an electrochromic device having adjustable reflectivity, and this embodiment differs from Embodiment 7 in that the second electrochromic functional layer is a polymer dispersed liquid crystal layer, and a material of the polymer dispersed liquid crystal layer is composed of 15wt% polymethyl methacrylate polymer and 75wt% liquid crystal small molecules of 4-(trans-4-n-hexylcyclohexyl)-4'-cyanobiphenyl.

In an alternative embodiment to this embodiment, the second electrochromic functional layer is a suspended particle device layer.

### Embodiment 10

This embodiment provides an electrochromic device having adjustable reflectivity, and this embodiment differs from Embodiment 7 in that the second substrate layer 4 is partially transparent or completely opaque, and adopts a material with a predetermined color, texture or pattern, and the second electrochromic functional layer 23 is a composite material layer formed by mixing the cathodic electrochromic material, the electrolyte and the anodic electrochromic material.

### Embodiment 11

This embodiment provides an electrochromic device having adjustable reflectivity, the structure of which is shown in FIG. 11, and this embodiment differs from Embodiment 7 in that the transparent insulating layer 8 is composed of a third transparent substrate layer 81, a functional layer 82 and a fourth transparent substrate layer 83 stacked in sequence; the functional layer 82 is a pattern layer, a texture layer, an anti-reflective layer, a color layer, an ink layer, a filter layer, a photonic crystal layer or a liquid crystal layer.

### Embodiment 12

This embodiment provides an electrochromic device having adjustable reflectivity, the structure of which is shown in FIG. 12, and this embodiment differs from Embodiment 7 in that a first substrate support layer 6 is arranged on the outer side of the first transparent substrate layer 1 (the first transparent substrate layer 1 and the first substrate support layer 6 are bonded by a bonding layer, and the bonding layer is not shown in FIG. 9), and a second substrate support layer 7 is arranged on the outer side of the second substrate layer 4 (the second substrate layer 4 and the second substrate support layer 7 are bonded by a bonding layer, and the bonding layer is not shown in FIG. 12).

In an alternative to this embodiment, the first substrate support layer 6 can also be merely arranged on the outer side of the first transparent substrate layer 1, or the second substrate support layer 7 can also be merely arranged on the outer side of the second substrate layer 4.

In the electrochromic device provided by embodiments of the present application, the transmittance of the electrochromic stack and the reflectivity of the metal ion stack can be adjusted by adjusting parameters such as the magnitude, duration, direction and the like of the applied voltage, and the combination of the transmittance change of the electrochromic stack and the reflectivity change of the metal ion stack can enhance the visual effect of the existing electrochromic devices, and bring colorful colors and reflective effects to the electrochromic device surface. The electrochromic device can be used in a wearable electronic product, a mobile electronic product terminal, architectural glass, laminated glass, insulating glass, a decorative film and other electronic terminal products.

The applicant has stated that although the specific embodiments of the present application are described above, the protection scope of the present application is not limited to the embodiments, and it should be apparent to those skilled in the art that variations or replacements, which are obvious for those skilled in the art without departing from the technical scope disclosed in the present application, all fall within the protection scope and the disclosure scope of the present application.

## Claims

1. An electrochromic device having adjustable reflectivity, **characterized in** comprising a first transparent substrate layer (1), an electrochromic stack (2), a metal ion stack (3) and a second substrate layer (4) stacked in sequence; the electrochromic stack (2) comprises a first transparent conductive layer (21) and a first electrochromic functional layer (22) stacked; the metal ion stack (3) comprises a second transparent conductive layer (31), a metal ion layer (32) and an electrodeposition suppression layer (33) stacked in sequence; the first electrochromic functional layer (22) is adjacent to the electrodeposition suppression layer (33).

2. The electrochromic device according to claim 1, wherein a metal layer (34) is further provided between the metal ion layer (32) and the second transparent conductive layer (31).

3. The electrochromic device according to claim 2, wherein a metal element of the metal layer (34) comprises one or a combination of at least two of silver, bismuth, copper and zinc.

4. The electrochromic device according to claim 1, wherein a material of the electrodeposition suppression layer (33) is selected from a triazole derivative.

5. The electrochromic device according to claim 4, wherein the triazole derivative is selected from one or a combination of at least two of benzotriazole, 1-(methoxymethyl)-1H-benzotriazole, 1-(formamidomethyl)-1H-benzotriazole and N5-benzyl-1H-1,2,4-triazole-3,5-diamine.

6. An electronic terminal, comprising the electrochromic device according to any one of claims 1 to 5.
